# FASCICULE DE BREVET EUROPEEN

(11) **EP 3 169 552 B1**
(45) Date de publication et mention de la délivrance du brevet: **07.11.2018**
(21) Numéro de dépôt: 15753112.0
(22) Date de dépôt: 16.07.2015
(51) Int. Cl.: B60R 13/08

(54) **CAPOT DE PROTECTION ACOUSTIQUE POUR ENCAPSULER UN COMPOSANT DE VÉHICULE AUTOMOBILE**
AKUSTISCHE SCHUTZHAUBE ZUR KAPSELUNG EINER KOMPONENTE EINES AUTOMOBILEN FAHRZEUGES
ACOUSTICAL PROTECTIVE COVER FOR ENCAPSULATING AN AUTOMOTIVE VEHICLE COMPONENT

(30) Priorité: 16.07.2014 FR 1456834
(43) Date de publication de la demande: 24.05.2017
(73) Titulaire: TREVES Products, Services & Innovation, 75008 Paris (FR)
(72) Inventeur: DREZET, David, F-51400 Prosnes (FR); RAYBAUD, Michael, F-02820 Corbeny (FR); RIBES, Stéphane, F-51140 Romain (FR)
(74) Mandataire: Sayettat, Julien Christian
(86) Numéro de dépôt international: PCT/FR2015/051960
(87) Numéro de publication internationale: WO 2016/009158

(56) Documents cités:
- EP-A1- 2 236 358
- WO-A1-2008/065049
- DE-U1-202012 010 993
- US-A1- 2007 012 509
- US-A1- 2008 238 118

## Description

L'invention concerne un capot de protection acoustique pour encapsuler un composant de véhicule automobile, une architecture de montage d'un tel capot et un procédé de réalisation d'un tel capot.
Il est connu de réaliser un capot de protection acoustique pour encapsuler un composant de véhicule automobile, ledit capot comprenant :
- une coque à base de matériau moulé par injection, ledit matériau comprenant une matrice thermoplastique et une charge dispersée de manière à présenter une densité comprise entre 1,3 et 1,6, ladite coque comprenant deux demi-coques délimitées par une zone amincie issue de moulage formant charnière souple,
- une couche de mousse - notamment de polyuréthanne - élastiquement compressible surmoulant la face interne de ladite coque, de sorte que ledit capot forme un système d'isolation de type « masse-ressort », la masse étant formée par ladite coque et le ressort par ladite couche,
- un moyen de maintien desdites demi-coques l'une vers l'autre une fois ladite charnière pliée, de manière à permettre l'encapsulation dudit composant. US 2007/012509 A1 divulgue un capot à base d'un matériau en polyvinyl butyral (PVB) chargé. Un élément de renfort d'une coque est divulgué par EP 2 236 358 A1.

Les composants susceptibles d'être encapsulés par un tel capot sont par exemple des pompes de direction assistée ou d'injection de carburant.
La matrice thermoplastique utilisée est généralement une polyoléfine élastomère ou un plastomère.
De ce fait, sa densité propre est assez basse - d'environ 0,85 +- 0,05 - ce qui oblige à utiliser un taux de charge élevé - généralement de l'ordre de 60% en masse du matériau de la coque - afin d'atteindre la densité attendue.

La charge utilisée est notamment minérale - étant par exemple sous forme de calcite ou de baryte - ou métallique.

Avec un taux de charge aussi élevé, l'allongement du matériau est très limité, ce qui rend la charnière très cassante.

L'invention a pour but de pallier cet inconvénient.

A cet effet, et selon un premier aspect, l'invention propose un capot de protection acoustique pour encapsuler un composant de véhicule automobile, ledit capot comprenant :
- une coque à base de matériau moulé par injection, ledit matériau comprenant une matrice thermoplastique et une charge dispersée de manière à présenter une densité comprise entre 1,3 et 1,6, ladite coque comprenant deux demi-coques délimitées par une zone amincie issue de moulage formant charnière souple,
- une couche de mousse élastiquement compressible surmoulant la face interne de ladite coque, de sorte que ledit capot forme un système d'isolation de type « masse-ressort », la masse étant formée par ladite coque et le ressort par ladite couche,
- un moyen de maintien desdites demi-coques l'une vers l'autre une fois ladite charnière pliée, de manière à permettre l'encapsulation dudit composant, ledit capot présentant en outre les caractéristiques suivantes :
- ladite matrice est en polyvinyl butyral (PVB),
- le taux de charge est inférieur ou égal à 50% en masse dudit matériau.

Une utilisation classique du PVB consiste à l'interposer en film entre deux couches de verre, notamment pour réaliser des pare-brise de véhicules automobiles ou des vitres d'immeubles.

Une caractéristique de cette matière est son élasticité très importante (environ 240% d'allongement avant rupture) qui permet de retenir le verre cassé et qui évite aux couches de verre de voler en éclats lors d'un choc.

En outre, le PVB présente une densité de l'ordre de 1,1, donc sensiblement supérieure à celle des matrices utilisées dans l'art antérieur.

Il en résulte que l'obtention d'une même densité requiert moins de charge pour une matrice en PVB que pour une matrice telle que connue de l'art antérieur.

La grande élasticité du PVB combinée au fait que l'on amoindrit le taux de charge permet la réalisation d'une charnière particulièrement souple et donc non cassante.

Selon d'autres aspects, l'invention propose une architecture de montage d'un tel capot et un procédé de réalisation d'un tel capot.

D'autres particularités et avantages de l'invention apparaîtront dans la description qui suit, faite en référence aux figures jointes, dans lesquelles :

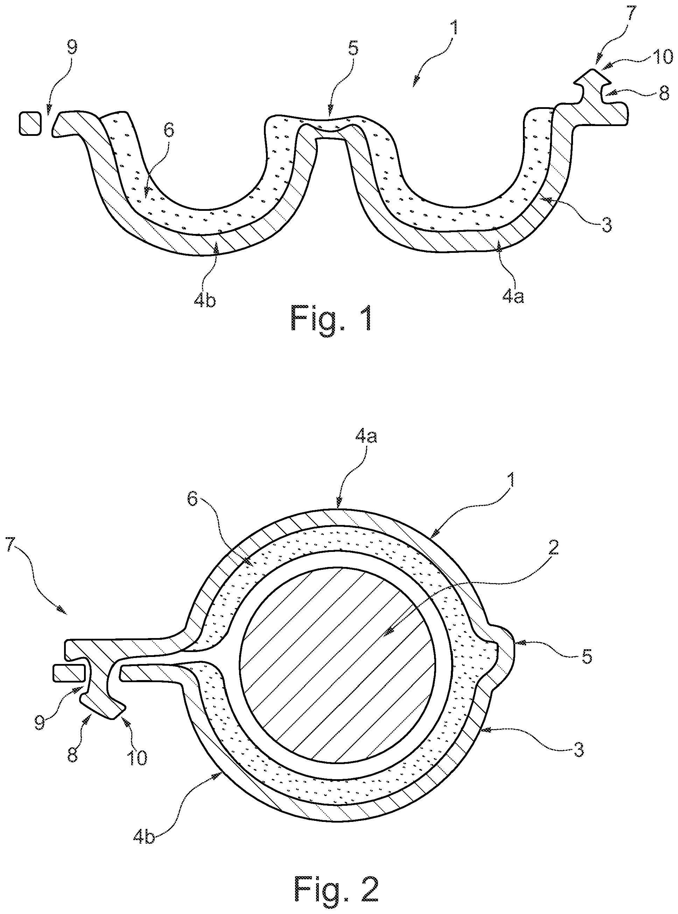

- la figure 1 est une vue schématique en coupe d'un capot, la charnière étant non pliée,
- la figure 2 est une vue schématique en coupe du capot de la figure 1 une fois monté autour d'un composant de véhicule automobile, la charnière étant pliée et le moyen de maintien des demi-coques étant activé.

En référence aux figures, on décrit un capot 1 de protection acoustique pour encapsuler un composant 2 de véhicule automobile, ledit capot comprenant :
- une coque 3 à base de matériau moulé par injection, ledit matériau comprenant une matrice thermoplastique et une charge dispersée de manière à présenter une densité comprise entre 1,3 et 1,6, ladite coque comprenant deux demi-coques 4a,4b délimitées par une zone amincie issue de moulage formant charnière 5 souple,
- une couche 6 de mousse élastiquement compressible surmoulant la face interne de ladite coque, de sorte que ledit capot forme un système d'isolation de type « masse-ressort », la masse étant formée par ladite coque et le ressort par ladite couche,
- un moyen de maintien 7 desdites demi-coques l'une vers l'autre une fois ladite charnière pliée, de manière à permettre l'encapsulation dudit composant, ledit capot présentant en outre les caractéristiques suivantes :
- ladite matrice est en polyvinyl butyral (PVB),
- le taux de charge est inférieur ou égal à 50% en masse dudit matériau.

Selon une réalisation, le taux de charge est compris entre 42% et 46% en masse du matériau de la coque 3.

Selon la réalisation représentée, le moyen de maintien 7 comprend une patte 8 - ici pourvue d'un harpon d'extrémité 10 - issue de matière de la coque 3 et une fente 9, réalisée dans ladite coque, de réception de ladite patte en emboitement.

Selon une réalisation, la charge est minérale - étant par exemple sous forme de calcite ou de baryte - ou métallique.

Selon une réalisation, la couche 6 compressible est à base de mousse de polyuréthanne flexible

On décrit à présent une architecture de montage d'un capot 1 de protection acoustique, ladite architecture comprenant ledit capot et un composant 2 de véhicule automobile à protéger, ledit capot étant monté avec la couche 6 de mousse disposée en contact serrant autour dudit composant, notamment contre un carter faisant partie dudit composant.

On décrit enfin un procédé de réalisation d'un capot 1, ledit procédé comprenant l'étape de séparer le polyvinyle butyral compris dans un verre feuilleté destiné au recyclage afin de réaliser la coque 3.

Un intérêt majeur de déployer un tel procédé est que le PVB recyclé ne présente pas une qualité satisfaisante pour être réutilisé dans la fabrication de verre feuilleté ; on trouve alors ici une filière de recyclage très appropriée pour le PVB.

On notera que le PVB, du fait de son point de fusion très bas (environ 110°C) et de son caractère amorphe - à l'opposé des polyoléfines utilisées dans l'art antérieur qui sont des semi-cristallins - permet un pliage répété de la charnière 5 en sortie de moule alors que la coque 3 est encore chaude, ce qui permet une orientation dans chaînes moléculaires rendant ladite charnière d'autant plus robuste.

Le surmoulage du capot 1 par la couche 6 de mousse est réalisé par mise en place de la coque 3 dans un moule, la charnière 5 étant non pliée, et injection d'un mélange précurseur de mousse élastiquement compressible sur la face interne de ladite coque.

## Revendications

1. Capot (1) de protection acoustique pour encapsuler un composant (2) de véhicule automobile, ledit capot comprenant :
• une coque (3) à base de matériau moulé par injection, ledit matériau comprenant une matrice thermoplastique et une charge dispersée de manière à présenter une densité comprise entre 1,3 et 1,6, ladite coque comprenant deux demi-coques (4a,4b) délimitées par une zone amincie issue de moulage formant charnière (5) souple,
• une couche (6) de mousse élastiquement compressible surmoulant la face interne de ladite coque, de sorte que ledit capot forme un système d'isolation de type « masse-ressort », la masse étant formée par ladite coque et le ressort par ladite couche,
• un moyen de maintien (7) desdites demi-coques l'une vers l'autre une fois ladite charnière pliée, de manière à permettre l'encapsulation dudit composant,
ledit capot étant **caractérisé en ce que** :
• ladite matrice est en polyvinyl butyral (PVB),
• le taux de charge est inférieur ou égal à 50% en masse dudit matériau.

2. Capot selon la revendication 1, **caractérisé en ce que** le taux de charge est compris entre 42% et 46% en masse du matériau de la coque (3).

3. Capot selon l'une des revendications 1 ou 2, **caractérisé en ce que** le moyen de maintien (7) comprend une patte (8) issue de matière de la coque (3) et une fente (9), réalisée dans ladite coque, de réception de ladite patte en emboitement.

4. Capot selon l'une quelconque des revendications 1 à 3, **caractérisé en ce que** la charge est minérale ou métallique.

5. Capot selon l'une quelconque des revendications 1 à 4, **caractérisé en ce que** la couche (6) compressible est à base de mousse de polyuréthanne flexible.

6. Architecture de montage d'un capot (1) de protection acoustique selon l'une quelconque des revendications 1 à 5, ladite architecture comprenant ledit capot et un composant (2) de véhicule automobile à protéger, ledit capot étant monté avec la couche (6) de mousse disposée en contact serrant autour dudit composant.

7. Procédé de réalisation d'un capot selon l'une quelconque des revendications 1 à 5, ledit procédé comprenant l'étape de séparer le polyvinyle butyral compris dans un verre feuilleté destiné au recyclage afin de réaliser la coque.

## Patentansprüche

1. Akustik-Schutzabdeckung (1), um eine Kraftfahrzeugkomponente (2) zu verkapseln, wobei die Abdeckung umfasst:
- eine Schale (3) auf Basis von spritzgegossenem Material, wobei das Material eine thermoplastische Matrix und einen Füllstoff umfasst, der so verteilt ist, dass er eine Dichte im Bereich zwischen 1,3 und 1,6 aufweist, wobei die Schale zwei Halbschalen (4a, 4b) umfasst, die von einer aus dem Guss hervorgegangenen verdünnten Zone begrenzt werden, welche ein biegsames Scharnier (5) bildet,
- eine elastisch komprimierbare Schaumstoffschicht (6), welche die Innenfläche der Schale derart überformt, dass die Abdeckung ein Isolationssystem vom "Masse-Feder"-Typ bildet, wobei die Masse von der Schale und die Feder von der Schicht gebildet wird,
- ein Mittel zum Halten (7) der Halbschalen gegeneinander, sobald das Scharnier gebogen wurde, um das Verkapseln der Komponente zu ermöglichen,
wobei die Abdeckung **dadurch gekennzeichnet ist, dass**:
- die Matrix aus Polyvinylbutyral (PVB) ist,
- der Füllgrad kleiner als oder gleich 50 Masse-% des Materials ist.

2. Abdeckung nach Anspruch 1, **dadurch gekennzeichnet, dass** der Füllgrad im Bereich zwischen 42 Masse-% und 46 Masse-% des Materials der Schale (3) beträgt.

3. Abdeckung nach einem der Ansprüche 1 oder 2, **dadurch gekennzeichnet, dass** das Haltemittel (7) eine aus Material der Schale (3) hervorgegangene Klaue (8) und einen in der Schale ausgeführten Schlitz (9) zum Aufnehmen der Klaue durch Einstecken umfasst.

4. Abdeckung nach einem der Ansprüche 1 bis 3, **dadurch gekennzeichnet, dass** der Füllstoff mineralisch oder metallisch ist.

5. Abdeckung nach einem der Ansprüche 1 bis 4, **dadurch gekennzeichnet, dass** die komprimierbare Schicht (6) auf Basis von flexiblem Polyurethanschaumstoff ist.

6. Architektur zum Einbauen einer Akustik-Schutzabdeckung (1) nach einem der Ansprüche 1 bis 5, wobei die Architektur die Abdeckung und eine Kraftfahrzeugkomponente (2) umfasst, die geschützt werden soll, wobei die Abdeckung mit der Schaumstoffschicht (6) in Klemmkontakt um die Komponente herum angeordnet eingebaut wird.

7. Verfahren zum Ausführen einer Abdeckung nach einem der Ansprüche 1 bis 5, wobei das Verfahren den Schritt des Heraustrennens des in einem zum Recycling vorgesehenen Verbundglas umfassten Polyvinylbutyrals umfasst, um die Schale auszuführen.

## Claims

1. Acoustic protection cover (1) for encapsulating a motor vehicle component (2), said cover comprising:
- a shell (3) based on injection-moulded material, said material comprising a thermoplastic matrix and a filler that is dispersed in such a way as to exhibit a density of between 1.3 and 1.6, said shell comprising two half-shells (4a, 4b) delimited by a thin region originating from the moulding forming a flexible hinge (5),
- a layer (6) of elastically compressible foam being overmoulded onto the internal face of said shell, so that said cover forms an insulation system of the "mass-spring" type, the mass being formed by said shell and the spring by said layer,
- a means (7) of holding said half-shells together once said hinge has been folded, so as to allow said component to be encapsulated,
said cover being **characterised in that**:
- said matrix being made of polyvinyl butyral (PVB),
- the level of filling is less than or equal to 50% by mass of said material.

2. Covers according to claim 1, **characterised in that** the level of filling is between 42% and 46% by mass of the material of the shell (3).

3. Covers according to one of claims 1 or 2, **characterised in that** the means (7) of holding comprise a tab (8) originating from the material of the shell (3) and a slot (9), made in said shell, for receiving said tab through interlocking.

4. Covers according to any of claims 1 to 3, **characterised in that** the filler is mineral or metallic.

5. Covers according to any of claims 1 to 4, **characterised in that** the compressible layer (6) has a flexible polyurethane foam base.

6. Architecture for mounting an acoustic protection cover (1) according to any of claims 1 to 5, said architecture comprising said cover and a motor vehicle component (2) to protect, said cover being mounted with the layer (6) of foam arranged in tight contact around said component.

7. Method for producing a cover according to any of claims 1 to 5, said method comprising the step of separating the polyvinyl butyral comprised in a laminated glass intended for recycling in order to create the shell.
